# FASCICULE DE BREVET EUROPEEN

(11) **EP 2 679 855 B1**
(45) Date de publication et mention de la délivrance du brevet: **17.04.2019**
(21) Numéro de dépôt: 13003299.8
(22) Date de dépôt: 28.06.2013
(51) Int. Cl.: F16F 1/38, F16F 3/087

(54) **Palier élastique pour véhicule automobile**
Elastisches Lager für Kraftfahrzeug
Elastic bearing for automotive vehicle

(30) Priorité: 28.06.2012 FR 1201834
(43) Date de publication de la demande: 01.01.2014
(73) Titulaire: Anvis SD France SAS, 58302 Decize Cedex (FR)
(72) Inventeur: Israel, Alain, 58300 Saint-Léger des Vignes (FR); Dupuis, Frédéric, 58000 Nevers (FR)
(74) Mandataire: Schmid, Nils T.F.

(56) Documents cités:
- EP-A2- 1 978 275
- EP-B1- 1 250 537
- WO-A1-95/33934
- FR-A- 1 455 600
- FR-A1- 2 349 466
- FR-A1- 2 805 869

## Description

L'invention se rapporte à un palier élastique destiné à un véhicule automobile, en particulier pour lier élastiquement une partie du véhicule, telle qu'un moteur et/ou une transmission, à la carrosserie. L'invention se rapporte également à un procédé de fabrication d'un tel palier.

S'agissant d'un palier élastique, en particulier à usage dans le domaine de l'automobile, on cherche à réaliser entre une douille intérieure et une douille extérieure une liaison à amortissement élastique qui présente une rigidité radiale élevée. Lorsqu'on construit de tels paliers, il faut veiller à optimiser la résistance à la fatigue.

Un exemple de palier de type générique est connu du document EP 1 250 537 B1, lequel palier comporte une douille intérieure rigide, une douille extérieure rigide entourant la douille intérieure, et deux douilles intermédiaires rigides. Entre ces douilles sont agencés trois espaces intermédiaires en forme de douille, dans chacun desquels est agencé un corps intermédiaire respectif en élastomère. Les douilles intermédiaires servent à augmenter la rigidité radiale du palier élastique par rapport à sa rigidité axiale. Il est en outre connu de précontraindre partiellement, en compression, le matériau élastomère. Le palier élastique connu est réalisé en déformant plastiquement la douille extérieure ainsi que de la douille intérieure après vulcanisation du corps en élastomère, dans le sens d'une réduction ou d'un élargissement, ce qui génère une précontrainte. Ce palier élastique générique, qui présente un rapport élevé entre rigidité radiale et rigidité axiale, a fait ses preuves. Il doit cependant être construit de manière à résister à la fatigue.

FR 1 455 600 A se rapporte aux manchons élastiques comprenant un ou plusieurs éléments élastomères intermédiaires qui sont liés par une colle et bloqués de façon compressible entre deux ou plusieurs chemises rigides concentriques.

L'invention est définie par les caractéristiques des revendications 1 et 7.

L'objectif de l'invention est de surmonter les inconvénients de l'état de la technique, et en particulier d'augmenter sensiblement la résistance à la fatigue d'un palier élastique de type générique.

Cet objectif est atteint grâce à la caractéristique selon laquelle les corps intermédiaires en élastomère sont précontraints.

On prévoit ensuite un palier élastique destiné à un véhicule automobile, notamment pour lier élastiquement une partie du véhicule automobile, telle qu'un moteur et/ou une transmission, à la carrosserie. Le palier élastique présente une douille intérieure rigide et déformable plastiquement, une douille extérieure rigide et déformable plastiquement qui entoure la douille intérieure, et au moins deux douilles intermédiaires rigides, dont l'une au moins peut être déformée plastiquement. Une douille déformable plastiquement, comme la douille extérieure, intérieure et intermédiaire, est notamment formée lorsqu'elle est en métal, en particulier en aluminium. De préférence, toutes les douilles sont fabriquées dans le même matériau rigide, déformable plastiquement. Il est clair que d'autres matériaux déformables plastiquement peuvent également être envisagés. Comme cela a été indiqué plus haut, l'une au moins des douilles intermédiaires peut ne pas être en matériau déformable plastiquement : pour cette douille, on peut utiliser une matière synthétique particulièrement rigide. Les douilles peuvent toutes être disposées concentriquement les unes par rapport aux autres, c'est-à-dire coaxialement à un axe longitudinal commun. Les douilles intérieure, extérieure et les deux douilles intermédiaires au moins sont disposées les unes par rapport aux autres de telle manière que soient formés entre deux douilles voisines au moins trois espaces intermédiaires selon la direction radiale en forme de douilles. Au moins trois corps intermédiaires en élastomère sont disposés dans les espaces intermédiaires. Deux corps intermédiaires en élastomère peuvent être formés dans un unique processus d'injection et de vulcanisation de telle sorte que les douilles intermédiaires soient intégrées dans un corps en élastomère. Chaque corps intermédiaire en élastomère situé entre deux douilles respectives peut être défini de manière à s'étendre au minimum sur toute la longueur de la plus courte des douilles associées. Chacun des trois corps intermédiaires élastiques au moins peut être disposé en contact direct avec adhérence avec les douilles rigides voisines afin de pouvoir introduire et récupérer des efforts de chargement entre ces douilles voisines et le corps intermédiaire en élastomère. Les corps intermédiaires en élastomère amortissent les oscillations de charge introduites sur la douille extérieure et/ou la douille intérieure grâce à une déformation correspondante. Selon l'invention, les trois corps intermédiaires au moins, et en particulier tous les corps intermédiaires, sont précontraints en compression. La précontrainte est de préférence égale tout le long du corps intermédiaire en élastomère. Lors du calibrage de la précontrainte, en particulier lors de la réduction ou de l'élargissement plastiques des douilles voisines, on génère dans le corps intermédiaire en élastomère une répartition de pression uniforme le long de chaque douille calibrée. Il est clair que la précontrainte de compression est notamment plus petite dans les sections en élastomère proches de l'extrémité longitudinale des douilles parce que le matériau élastomère peut éventuellement y dévier axialement vers l'extérieur, dans une zone non délimitée par des douilles.

La caractéristique selon l'invention permet d'obtenir un palier élastique dont le rapport entre la rigidité radiale et la rigidité axiale est sensiblement plus élevé par rapport à l'état de la technique, la résistance à la fatigue étant de plus nettement augmentée. Deux des trois corps intermédiaires en élastomère sont précontraints en déformant plastiquement à chaque fois l'une des douilles extérieures, et en la calibrant, notamment en l'élargissant ou la réduisant. Contrairement aux autres corps intermédiaires en élastomère, l'un des corps intermédiaires en élastomère n'est pas précontraint par déformation plastique de la douille voisine, mais au moyen d'un coulissement coaxial d'une douille non recouverte dans l'autre corps intermédiaire en élastomère en forme de douille fabriqué préalablement. Le troisième corps intermédiaire élastique ainsi que la douille non recouverte sont surdimensionnés ou sousdimensionnée radialement de telle sorte que la précontrainte souhaitée soit générée dans l'autre corps intermédiaire en élastomère lors de l'emboîtement mutuel. Lors de l'emboîtement de la douille et du troisième corps intermédiaire en élastomère, un contact surfacique est créé entre l'autre corps intermédiaire en élastomère et la douille, au niveau duquel on réalise une transmission d'efforts exclusivement grâce à l'interaction mécanique de la surface limite opposée de l'autre corps intermédiaire en élastomère et de la douille, sans qu'apparaissent, pratiquement, entre les surfaces limites, des réactions d'accouplement chimiques, telles que des liaisons covalentes.

Selon l'invention, l'un au moins des corps intermédiaires en élastomère présente une surface limite tournée vers la douille rigide voisine, laquelle est dépourvue de tout agent adhésif chimique et repose contre la surface limite tournée vers celle-ci de la douille voisine. Lorsqu'on considère le palier élastique selon l'invention, il n'existe préalablement aucun collage, notamment aucun agent adhésif, des surfaces en contact surfacique entre la couche intermédiaire en élastomère et la douille voisine. Au contraire, le corps intermédiaire en élastomère concerné présente également une structure d'élastomère homogène au niveau de la surface limite, dont la composition structurelle ne se trouve pas modifiée du fait d'agents adhésifs. La surface limite formée par la structure homogène du matériau élastomère de l'un au moins des corps intermédiaires vient principalement en prise avec la surface limite voisine de la douille grâce à un frottement d'adhérence, cette prise permettant de transmettre des efforts de manière fiable entre l'un au moins des corps intermédiaires en élastomère et la surface limite associée de la douille.

De préférence, dans le palier élastique selon l'invention, seule une unique transition de contact surfacique entre une surface limite de douille et la surface limite voisine du corps en élastomère se trouve dépourvue d'agent adhésif chimique, donc exclusivement réalisée par contact avec frottement d'adhérence. Les autres transitions entre la surface limite d'une douille et le corps intermédiaire en élastomère voisin sont réalisées en utilisant par exemple un agent adhésif approprié. Il s'avère avantageux de régler une limite de résistance à la torsion pour le palier élastique selon l'invention à l'aide de la précontrainte dans l'ensemble des couches intermédiaires en élastomère, y compris donc pour la couche intermédiaire en élastomère qui est accouplée avec la douille voisine sans agent adhésif. Si cette limite de résistance à la torsion devait être dépassée par des charges de torsion agissant en fonctionnement sur le palier élastique, alors un effet de frottement de glissement pourrait être utilisé à la suite du frottement d'adhérence en fonction du réglage de la précontrainte dans le corps intermédiaire en élastomère concerné.

La transition entre frottement d'adhérence et frottement de glissement au niveau de la surface limite dépourvue d'agent adhésif peut être réglée à volonté en calibrant la précontrainte dans le corps intermédiaire en élastomère concerné.

Dans un mode de réalisation préféré de l'invention, le palier élastique selon l'invention présente exactement trois corps intermédiaires en élastomère entre la douille extérieure, la douille intérieure et exactement deux douilles intermédiaires. Dans un mode de réalisation de l'invention en remplacement, le palier selon l'invention présente exactement quatre corps intermédiaires en élastomère entre la douille extérieure et la douille intérieure et exactement trois douilles rigides.

De préférence, les douilles rigides présentent chacune un côté intérieur et un côté extérieur cylindriques, l'axe longitudinal commun de l'agencement concentrique étant constitué d'un axe de rotation des douilles. En outre, l'épaisseur radiale de l'ensemble des corps intermédiaires en élastomère peut être sensiblement égale et/ou plus grande que l'épaisseur radiale de l'ensemble des douilles intermédiaires, en particulier de l'ensemble des douilles.

Pour réaliser le contact surfacique dépourvu d'agent adhésif tel qu'évoqué plus haut, selon l'invention, il est prévu de réaliser le palier élastique, et notamment le fabriquer, par étapes en conformant deux sous-ensembles de palier fabriqués séparément l'un de l'autre, sous-ensembles qui sont mécaniquement accouplés l'un avec l'autre dans une seconde étape, notamment par emboîtement. De préférence, l'un au moins des sous-ensembles de cette paire présente une douille extérieure ou une douille intérieure et exactement deux douilles intermédiaires, tandis que, dans un mode de réalisation à deux douilles intermédiaires, l'autre sous-ensemble présente la douille extérieure ou la douille intérieure avec (seulement) un corps intermédiaire en élastomère sans douille intermédiaire, ou, dans un mode de réalisation du palier élastique à trois douilles intermédiaires, l'autre sous-ensemble présente la douille extérieure ou intérieure avec exactement une douille intermédiaire et deux corps intermédiaires en élastomère. L 'un des sous-ensembles de la paire présente une couche intermédiaire en élastomère qui n'est pas recouverte par une douille intermédiaire, et présente donc une surface limite librement accessible, notamment cylindrique. À chaque fois, l'autre sous-ensemble présente une douille intermédiaire dont l'une des surfaces limites s'étendant axialement et tournées dans la direction radiale n'est pas recouverte de matériau élastomère, et forme ainsi également une surface limite opposée librement accessible. La surface limite et la surface limite opposée sont dimensionnées de manière adaptée l'une à l'autre, de telle manière qu'une précompression, générée dans la direction radiale, soit établie dans tous les corps intermédiaires en élastomère lors de l'assemblage axial des deux sous-ensembles par emboîtement. Les surfaces limites opposées à l'état assemblé forment un accouplement purement mécanique entre la douille concernée et le corps intermédiaire en élastomère sans utiliser d'agent adhésif. Selon la manière dont le corps intermédiaire en élastomère concerné et la douille sont dimensionnés, on peut régler la précontrainte en compression dans le corps intermédiaire en élastomère à l'état assemblé, ce qui permet de fixer aussi la valeur seuil de résistance à la torsion.

Les corps intermédiaires en élastomère qui sont montés sur la douille à l'aide d'un agent adhésif peuvent être précontraints en compression soit dès l'état de sous-ensemble soit à l'état assemblé du palier élastique, en élargissant ou réduisant la douille où se fait la transition avec l'agent adhésif.

Dans un mode de réalisation préféré de l'invention, on réalise une précompression de tous les corps intermédiaires en élastomère recouverts de part et d'autre par une douille en contractant ou en élargissant par déformation plastique uniquement la douille voisine du corps intermédiaire en élastomère respectif, de manière à réduire la section transversale ou à l'agrandir, tandis que l'autre douille voisine demeure non déformée.

En outre, la présente invention concerne un procédé de fabrication d'un palier élastique, en particulier conformé selon l'invention. Dans le procédé selon l'invention, on élabore au cours d'une étape intermédiaire un premier sous-ensemble consistant en une armature extérieure ou une armature intérieure, telle qu'une douille extérieure ou douille intérieure, comprenant au moins un corps intermédiaire en élastomère, en particulier comprenant exactement un corps intermédiaire en élastomère, ou deux corps intermédiaires en élastomère séparés l'un de l'autre par une armature intermédiaire. Dans cette étape, le corps intermédiaire en élastomère peut être vulcanisé sur l'armature, et éventuellement sur l'armature intermédiaire, une surface limite de l'un au moins des corps intermédiaires en élastomère demeurant non traitée chimiquement (sans agent adhésif) et/ou librement accessible. On élabore un second sous-ensemble constitué d'une armature extérieure ou d'une armature intérieure, en particulier d'une douille extérieure ou intérieure, et notamment exactement deux armatures intermédiaires, en particulier des douilles intermédiaires, en réalisant deux espaces intermédiaires en forme de douilles, dans lesquels sont disposés des corps intermédiaires en élastomère conformés de manière correspondante. Les corps intermédiaires en élastomère du second sous-ensemble peuvent être vulcanisés sur les armatures respectives à l'aide d'un processus de vulcanisation, en utilisant des agents adhésifs. Dans une étape suivante, les deux corps intermédiaires en élastomère du second sous-ensemble, et éventuellement un corps intermédiaire en élastomère du premier sous-ensemble, sont précontraints par déformation plastique, en particulier en diminuant ou en élargissant dans la direction radiale la section transversale des armatures associées. En particulier, on peut considérer les armatures dépourvues de matériau élastomère. Avec la dernière étape de procédé consistant à monter l'un sur l'autre les premier et second sous-ensembles, un corps intermédiaire en élastomère est finalement réalisé. Les sous-ensembles sont emboîtés suivant la direction longitudinale, ces derniers étant dimensionnés en correspondance mutuelle afin d'atteindre la précontrainte souhaitée. Lors de ce processus de montage, aucune des douilles n'est déformée plastiquement.

D'autres propriétés et avantages ou caractéristiques de l'invention apparaîtront clairement à la lecture de la description qui va suivre d'un mode de réalisation préféré, parmi d'autres, en faisant référence aux dessins, dont les figures représentent :
figure 1 : une vue en coupe transversale médiane du palier élastique selon l'invention ;
figure 2a : une vue en coupe transversale d'un premier sous-ensemble du palier élastique de la figure 1, dans un état de fabrication intermédiaire ;
figure 2b : une vue en coupe transversale d'un second sous-ensemble du palier élastique de la figure 1, dans un état de fabrication intermédiaire ;
figure 3 : une vue en coupe transversale médiane d'un autre mode de réalisation du palier élastique selon l'invention ;
figure 4 : une vue en coupe transversale d'un premier sous-ensemble du palier élastique de la figure 3, dans un état de fabrication intermédiaire ; et
figure 4b : une vue en coupe transversale d'un second sous-ensemble du palier élastique de la figure 3, dans un état de fabrication intermédiaire.

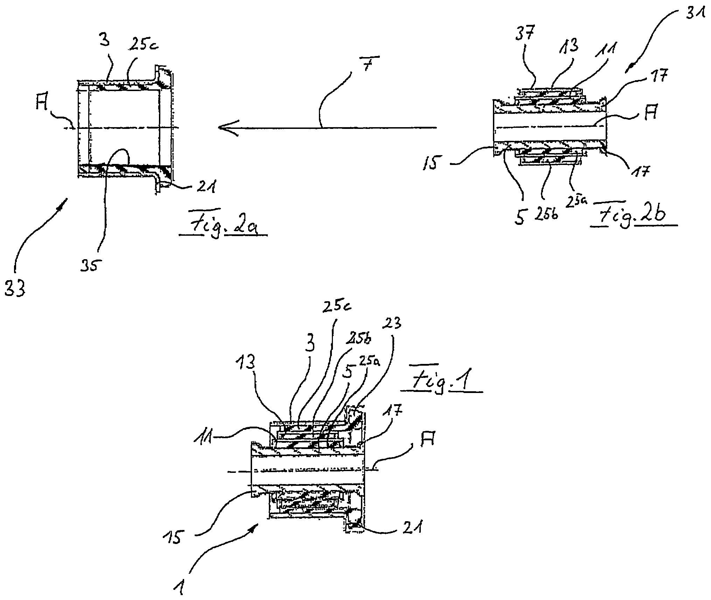

Sur la figure 1, le palier élastique selon l'invention est généralement pourvu du chiffre de référence 1. Le palier élastique 1 est destiné à lier un moteur à la carrosserie d'un véhicule automobile avec possibilité d'oscillation. Comme pièces principales, le palier élastique 1 comporte une douille extérieure cylindrique 3 et une douille intérieure cylindrique 5, lesquelles sont fabriquées en métal, tel que l'aluminium. Entre la douille extérieure 3 et la douille intérieure 5 sont disposées deux douilles intermédiaires cylindriques 11, 13, qui sont également réalisées en métal, tel que l'aluminium. Les douilles intermédiaires 11, 13 présentent une épaisseur plus faible que la douille extérieure 3 et la douille intérieure 5, la douille intérieure 5 présentant la plus grande épaisseur.

La douille intérieure 5 présente la plus grande étendue axiale (dans la direction longitudinale A) et comporte deux extrémités d'appui 15, 17 qui présentent une surface d'appui radiale s'agrandissant qui est réalisée en formant une surépaisseur dirigée radialement vers l'extérieur par déformation plastique à l'aide d'une matrice creuse d'écoulement (bouterolle). Les deux extrémités 15, 17 de la douille intérieure 5 avec leurs surépaisseurs définissent l'étendue axiale maximale du palier élastique 1.

Les douilles intermédiaires 11, 13 présentent des longueurs axiales différentes, la douille intermédiaire la plus proche de la douille intérieure 5 étant plus longue que la douille intermédiaire 13 la plus proche de la douille extérieure 3.

La douille extérieure 3 présente une étendue axiale plus longue que les douilles intermédiaires 3 mais plus courte que la douille intérieure 5. Elle comporte un épaulement 21 coudé radialement vers l'extérieur qui est constitué par repliement d'une extrémité axiale de la douille extérieure 3. L'épaulement 21 qui se dresse radialement vers l'extérieur et à angle droit sert d'appui rigide pour une butée en élastomère 23 active axialement.

Les douilles 3, 5, 11, 13 présentent dans leur ensemble un axe longitudinal commun A, et sont disposées de manière concentrique et coaxiale par rapport à celui-ci en ménageant trois espaces intermédiaires en forme de douilles. Des corps intermédiaires en élastomère 25a à 25c sont respectivement disposés dans ces espaces intermédiaires. Les corps intermédiaires en élastomère 25a à 25c présentent une épaisseur radiale sensiblement constante le long de l'axe A. Comme on peut le voir sur la figure 1, l'étendue axiale du corps intermédiaire en élastomère médian 25b situé entre les douilles intermédiaires 11, 13 est la plus faible.

Le corps intermédiaire en élastomère 25c disposé entre la douille intermédiaire extérieure 13 et la douille extérieure 3 dépasse axialement de l'épaulement 21 de la douille extérieure 3 et, d'un seul tenant, se transforme en butée 23.

Tel que représenté sur la figure 1, en fonctionnement non chargé, c'est-à-dire lorsqu'aucune charge oscillante et/ou charge statique n'agit sur le palier élastique, en particulier par l'intermédiaire de la douille extérieure 3 et/ou de la douille intérieure 5, tous les corps intermédiaires en élastomère 25a, 25b et 25c sont précontraints en compression. De préférence, les précontraintes à l'intérieur des corps en élastomère 25a à 25c sont égales.

Dans ce qui suit, on décrit, à l'aide des figures 2a et 2b, le procédé de fabrication selon l'invention, lequel permet la construction du palier élastique de la figure 1.

Les figures 2a et 2b représentent chacune l'état final de fabrication d'un sous-ensemble de palier respectif 31, 33, avant que ces deux sous-ensembles ne soient réunis pour finalement former le palier élastique 1. Ceci est indiqué par la flèche de montage F positionnée entre les figures 2a et 2b.

On prépare tout d'abord la douille intérieure 5 dépourvue des surépaisseurs 15, 17 aux extrémités axiales. Ensuite, dans une première étape de vulcanisation, les deux douilles intermédiaires 11, 13 sont vulcanisées en une forme correspondante sur la douille intérieure 5 à l'aide du matériau élastomère pour former un sous-ensemble de palier. Pour réaliser une transmission suffisante des efforts entre les couches intermédiaires en élastomère 25a et la douille intérieure 5 ainsi que la douille intermédiaire 11, on applique des agents adhésifs sur les surfaces de transition entre l'élastomère et le matériau rigide des douilles. On utilise aussi des agents adhésifs pour la couche intermédiaire en élastomère 25b, sur la zone de transition correspondante, de manière à réaliser un accouplement de force solide au niveau des zones de transition entre le matériau rigide des douilles et le corps en élastomère. Ensuite, on réalise les surépaisseurs 15 et 17 par déformation plastique axiale. Pour réaliser une précontrainte de compression dans le corps intermédiaire en élastomère 25a, on élargit la douille intérieure 5 radialement, vers l'extérieur. On génère la précontrainte dans le corps intermédiaire en élastomère médian 25b en réduisant de manière correspondante la section transversale de l'armature intermédiaire 13. On élargit la douille intérieure 5 et l'on contracte l'armature intermédiaire 13 en déformant plastiquement la douille respective. C'est pourquoi, il convient d'utiliser un matériau plastiquement déformable, tel que du métal, pour réaliser la douille intérieure 5 ainsi que l'armature intermédiaire médiane 13. Il n'est pas indispensable d'utiliser un matériau déformable plastiquement pour réaliser l'armature intermédiaire 11 : on peut aussi utiliser un matériau synthétique rigide.

Après que la précontrainte est appliquée dans les corps intermédiaires en élastomère 25a et 25b, le second sous-ensemble 31 est prêt.

On réalise le premier sous-ensemble 33 en préparant une douille extérieure 3 qui est vulcanisée sur le corps intermédiaire en élastomère extérieur 25c en réalisant un dimensionnement déterminé. On utilise un agent adhésif chimique dans la zone de transition entre la douille extérieure 3 et le corps intermédiaire en élastomère 25c.

On a ainsi fabriqué le premier sous-ensemble 33. Pour achever le palier élastique 1, on introduit le second sous-ensemble 31 et le premier sous-ensemble 33 l'un dans l'autre suivant la direction longitudinale A dans le cadre d'un processus de montage : on tient compte des dimensions extérieures radiales du second sous-ensemble pour adapter le dimensionnement du corps intermédiaire en élastomère 25c de telle manière que ce corps intermédiaire élastique 25c se trouve aussi sous une précontrainte après montage. Le choix des dimensions permet de régler la valeur de la précontrainte.

De cette manière, on réalise, sans agent chimique, un contact surfacique entre la surface limite 35 dirigée radialement vers l'intérieur appartenant au corps intermédiaire en élastomère 25c situé radialement à l'extérieur et la surface limite 37 dirigée radialement vers l'extérieur de l'armature intermédiaire 13 située radialement à l'extérieur. Du fait de la précontrainte de compression, on génère un contact avec adhérence entre les surfaces limites 35 et 37 qui permet un accouplement purement mécanique capable de transmettre des efforts entre le corps intermédiaire en élastomère 25c et la douille intermédiaire 13.

Le palier élastique selon l'invention 1 se distingue par une rigidité radiale particulièrement élevée, tous les corps intermédiaires en élastomère 25a-25c se trouvant précontraints. Le contact surfacique entre les surfaces limites 35 et 37 définit une valeur seuil de torsion qui est fixée par la précontrainte dans le corps intermédiaire en élastomère 25b. Si une charge agissant sur le palier élastique 1 devait dépasser la valeur seuil de torsion, alors le contact surfacique passerait d'un frottement d'adhérence à un frottement de glissement, ce qui empêcherait une surfatigue de tous les corps intermédiaires en élastomère 25a-25c. On réalise de cette manière un palier élastique 1 particulièrement résistant à la fatigue.

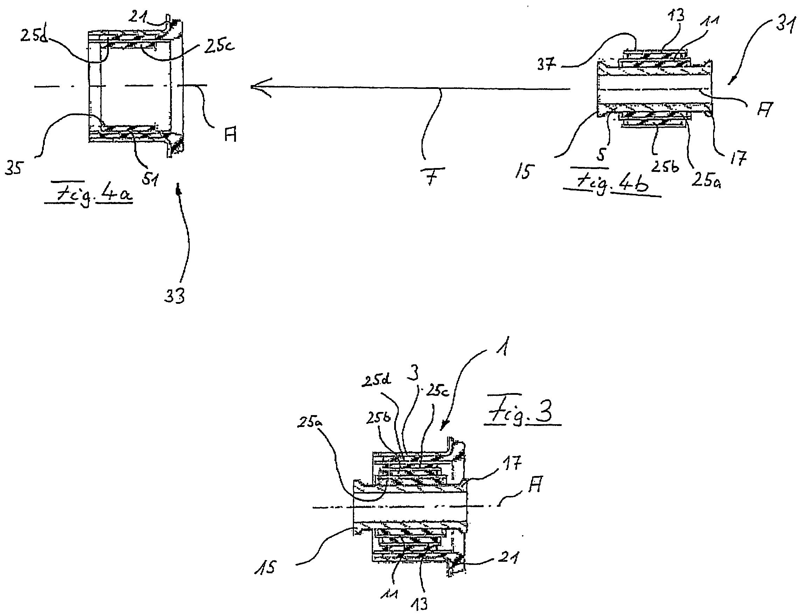

La figure 3 représente une autre réalisation du palier élastique 1 selon l'invention. Pour une meilleure lisibilité de la description des figures, les pièces identiques ou analogues sont pourvues des mêmes signes de référence que l'articulation élastique des figures 1, 2a et b.

Le palier élastique 1 selon la figure 3 se distingue de celui de la figure 1 en ce que quatre couches intermédiaires de corps en élastomère 25a à 25d sont prévues, en particulier d'épaisseur identique.

Le second sous-ensemble 31 (voir figure 4b) du palier élastique 1 de la figure 3 est réalisé comme le second sous-ensemble 31 du palier élastique 1 de la figure 1.

Le premier sous-ensemble 33 de la figure 4a se distingue de celui de la figure 2a en ce qu'on prévoit une douille intermédiaire 51 supplémentaire sur laquelle est monté, à la fois radialement vers l'extérieur et radialement vers l'intérieur, un corps intermédiaire en élastomère 25d et 25c.

Afin d'appliquer une précontrainte dans le corps intermédiaire en élastomère 25d radialement extérieur, la douille extérieure 5 est contractée avant l'assemblage (F) en réduisant sa section transversale. La douille intermédiaire 51 supplémentaire rigide autorise (par rapport au palier élastique de la figure 1) le maintien de la précontrainte dans le corps intermédiaire en élastomère 25d radialement extérieur.

Au niveau de la surface dirigée radialement vers l'intérieur de la douille intermédiaire 51 supplémentaire, on prévoit que la surface limite libre 35 du corps intermédiaire en élastomère 25c demeure dépourvue d'agent adhésif, en réalisant un contact de surface purement mécanique avec la surface limite 37 de la douille intermédiaire 13.

Le dimensionnement/calibrage radial correspondant du premier sous-ensemble 33 et du second sous-ensemble 31 permet de précontraindre la couche intermédiaire en élastomère 25c après le processus d'assemblage.

Les caractéristiques divulguées ci-avant, sur les figures et dans les revendications peuvent revêtir une importance certaine non seulement prises individuellement mais aussi en combinaison les unes des autres pour réalisation des configurations différentes de l'invention.

### Liste des signes de référence

- 1: Palier
- 3: Douille extérieure
- 5: Douille intérieure
- 11, 13, 51: Douilles intermédiaires
- 15, 17: Extrémités d'appui
- 21: Épaulement
- 23: Butée en élastomère
- 25a-d: Corps intermédiaires en élastomère
- 31, 33: Sous-ensemble de palier
- 35, 37: Surface limite
- 43: Surface limite
- A: Axe longitudinal
- F: Direction de montage

## Revendications

1. Palier élastique (1) pour un véhicule automobile, en particulier pour lier élastiquement une partie du véhicule, telle qu'un moteur et/ou une transmission, à la carrosserie, ledit palier comprenant : une douille intérieure (5) rigide et déformable plastiquement, une douille extérieure (3) rigide et déformable plastiquement qui entoure la douille intérieure, et au moins deux douilles intermédiaires rigides (11, 13, 51) dont l'une au moins est déformable plastiquement, la douille intérieure, la douille extérieure et au moins les deux douilles intermédiaires étant disposées les unes par rapport aux autres de telle manière que soient réalisés trois espaces intermédiaires au moins, en forme de douilles, dans lesquels sont disposés au moins trois corps intermédiaires en élastomère, les trois corps intermédiaires en élastomère (25a-25d) au moins étant précontraints en compression ; **caractérisé en ce que** le palier est composé de deux ou plusieurs sous-ensembles de palier (31, 33) séparés, un premier sous-ensemble de palier (33) étant tout d'abord constitué de la douille extérieure (3) ou de la douille intérieure (5), et le cas échéant d'une douille intermédiaire (51), et un second sous-ensemble de palier (31) étant constitué de la douille intérieure (5) ou de la douille extérieure (3), et exactement de deux douilles intermédiaires (11, 13), le premier sous-ensemble de palier (33) présentant avant montage sur le second sous-ensemble de palier (31) un corps intermédiaire en élastomère (25c) avec une surface limite (35) non recouverte d'une douille, et le second sous-ensemble de palier (31) comportant une douille intermédiaire (13) et une surface limite opposée (37) dépourvue de matériau élastomère, les surfaces limites (35, 37) étant dimensionnées de manière adaptée l'une à l'autre de telle manière qu'il s'établisse, lors d'un montage axial des deux sous-ensemble de palier (31, 33) l'un sur l'autre, une précompression générée dans la direction radiale du corps intermédiaire en élastomère (25c) ; dans lequel les sous-ensembles de palier (31, 33) sont adaptés pour être emboîté suivant la direction axiale sans utiliser d'agent adhésif pour former un contact surfacique de surfaces limites (35, 37) tournées les unes vers les autres des sous-ensembles de palier.

2. Palier (1) selon la revendication 1, **caractérisé en ce que** l'un au moins des corps intermédiaires en élastomère (25c) présente une surface limite (35) tournée vers la douille (13) rigide voisine qui repose contre une surface limite (37) tournée vers celle-ci de la douille voisine (13) dépourvue d'agent adhésif chimique.

3. Palier (1) selon l'une des revendications 1 et 2, **caractérisé en ce que** l'un au moins des corps intermédiaires en élastomère (25c) présente une surface limite (35) qui repose contre une surface limite opposée (37) de la douille voisine (13) en réalisant une liaison de contact avec transmission d'efforts qui est formée exclusivement par des forces mécaniques de frottement d'adhérence entre les surfaces limites (35, 37).

4. Palier (1) selon l'une des revendications précédentes, **caractérisé en ce qu'**il comporte exactement trois corps intermédiaires en élastomère (25a-25c) entre la douille extérieure (3), la douille intérieure (5) et deux douilles intermédiaires (11, 13), ou exactement quatre corps intermédiaires en élastomère (25a-25d) entre la douille extérieure (3), la douille intérieure (5) et trois douilles intermédiaires (11, 13, 51).

5. Palier (1) selon l'une des revendications précédentes, **caractérisé en ce que** chacune des douilles (3, 5, 11, 13, 51) présente un côté intérieur et un côté extérieur cylindriques et/ou que l'épaisseur radiale l'ensemble des corps intermédiaires en élastomère (25a-d) est sensiblement égale et/ou plus grande que l'épaisseur radiale de l'ensemble des douilles intermédiaires (11, 13, 51), en particulier de l'ensemble des douilles (3, 5, 11, 13, 51).

6. Palier (1) selon l'une des revendications précédentes, **caractérisé en ce qu'**une précompression de l'ensemble des corps intermédiaires en élastomère (25a, 25b, 25d) recouverts de part et d'autre de douilles (3, 5, 11) est réalisée en contractant par déformation plastique d'une seule des douilles (3, 5, 13) voisines de chaque corps intermédiaire en élastomère (25a, 25b, 25d), ou en élargissant cet douille, de manière à réduire sa section transversale, ou à agrandir cette dernière.

7. Procédé de fabrication d'un palier élastique (1), en particulier réalisé selon l'une des revendications précédentes, dans lequel :
- on élabore un premier sous-ensemble de palier (33) composé d'une armature extérieure ou d'une armature intérieure comprenant au moins un corps intermédiaire en élastomère (25c, 25d),
- on élabore un second sous-ensemble de palier (31) composé d'une armature extérieure ou d'une armature intérieure et/ou de deux armatures intermédiaires en réalisant deux espaces intermédiaires en forme de douilles dans lesquels on dispose deux corps intermédiaires en élastomère (25c, 25d) ;
- on précontraint en compression les deux corps intermédiaires en élastomère du second sous-ensemble de palier, et le cas échéant un corps intermédiaire en élastomère du premier sous-ensemble de palier, avant assemblage des sous-ensembles de palier (31, 33), en particulier en déformant plastiquement les armatures voisines,
**caractérisé en ce qu'**on précontraint dans la direction radiale un corps intermédiaire en élastomère lors du montage mutuel du premier et du second sous-ensemble de palier ; dans lequel les sous-ensembles de palier (31, 33) sont emboîtés suivant la direction axiale sans utiliser d'agent adhésif pour former un contact surfacique de surfaces limites tournées les unes vers les autres des sous-ensembles de palier.

## Patentansprüche

1. Elastisches Lager (1) für ein Kraftfahrzeug, insbesondere zum elastischen Verbinden eines Teils des Fahrzeugs, wie einen Motor und/oder ein Getriebe, mit der Karosserie, wobei das Lager aufweist: eine starre und plastisch verformbare Innenhülse (5), eine starre und plastisch verformbare Außenhülse (3), die die Innenhülse umgibt, und mindestens zwei starre Zwischenhülsen (11, 13, 51), von denen mindestens eine plastisch verformbar ist, wobei die Innenhülse, die Außenhülse und mindestens die zwei Zwischenhülsen derart relativ zueinander angeordnet sind, dass mindestens drei hülsenförmige Zwischenräume gebildet sind, in denen mindestens drei Zwischenkörper aus Elastomer angeordnet sind, wobei die drei Zwischenkörper aus Elastomer (25-25d) mindestens in Kompression vorgespannt sind,
**dadurch gekennzeichnet, dass** das Lager aus zwei oder mehreren getrennten Lagerunterbaugruppen (31, 33) besteht, wobei eine erste Lagerunterbaugruppe (33) zunächst aus der Außenhülse (3) oder der Innenhülse (5) und gegebenenfalls aus einer Zwischenhülse (51) gebildet ist, und wobei eine zweite Lagerunterbaugruppe (31) aus der Innenhülse (5) oder der Außenhülse (3) und genau aus zwei Zwischenhülsen (11, 13) gebildet ist, wobei die erste Lagerunterbaugruppe (33) vor der Montage auf die zweite Lagerunterbaugruppe (31) einen Zwischenkörper aus Elastomer (25c) mit einer Grenzfläche (35) aufweist, die nicht mit einer Hülse bedeckt ist, und die zweite Lagerunterbaugruppe (31) eine äußere Zwischenhülse (13) und eine gegenüberliegende Grenzfläche (37) ohne Elastomermaterial aufweist, wobei die Grenzflächen (35, 37) in geeigneter Weise zueinander derart dimensioniert sind, dass bei einer axialen Montage der zwei Lagerunterbaugruppen (31, 33) aufeinander in die radiale Richtung des Zwischenkörpers aus Elastomer (25c) eine Vorkompression erzeugt wird,
wobei die Lagerunterbaugruppen (31, 33) geeignet sind, um in axialer Richtung aufgesteckt zu werden, ohne Klebstoff zu verwenden, um einen Flächenkontakt von einander zugewandten Grenzflächen (35, 37) der Lagerunterbaugruppen zu bilden.

2. Lager (1) nach Anspruch 1, **dadurch gekennzeichnet, dass** mindestens einer der Zwischenkörper aus Elastomer (25c) eine Grenzfläche (35) aufweist, die der benachbarten starren Hülse (13) zugewandt ist, die an einer Grenzfläche (37) der benachbarten Hülse (13), die frei von chemischem Klebstoff ist, die dieser zugewandt ist, anliegt.

3. Lager (1) nach einem der Ansprüche 1 und 2, **dadurch gekennzeichnet, dass** der mindestens eine der Zwischenkörper aus Elastomer (25c) eine Grenzfläche (35) aufweist, die an einer gegenüberliegenden Grenzfläche (37) der benachbarten Hülse (13) anliegt, wodurch eine Kontaktverbindung mit Kraftübertragung hergestellt wird, die ausschließlich durch die mechanischen Haftreibungskräfte zwischen den Grenzflächen (35, 37) gebildet ist.

4. Lager (1) nach einem der vorhergehenden Ansprüche, **dadurch gekennzeichnet, dass** es genau drei Zwischenkörper aus Elastomer (25a-25c) zwischen der Außenhülse (3), der Innenhülse (5) und zwei Zwischenhülsen (11, 13) oder genau vier Zwischenkörper aus Elastomer (25a-25d) zwischen der Außenhülse (3), der Innenhülse (5) und drei Zwischenhülsen (11, 13, 51) aufweist.

5. Lager (1) nach einem der vorhergehenden Ansprüche, **dadurch gekennzeichnet, dass** jede der Hülsen (3, 5, 11, 13, 51) eine zylindrische Innenseite und eine zylindrische Außenseite aufweist und/oder dass die radiale Dicke der Baugruppe der Zwischenkörper aus Elastomer (25a-d) im Wesentlichen gleich und/oder größer als die radiale Dicke der Baugruppe der Zwischenhülsen (11, 13,51), insbesondere der Baugruppe der Hülsen (3, 5, 11, 13, 51) ist.

6. Lager (1) nach einem der vorhergehenden Ansprüche, **dadurch gekennzeichnet, dass** eine Vorkompression der Baugruppe der Zwischenkörper aus Elastomer (25a, 25b, 25d), die auf beiden Seiten mit Hülsen (3, 5, 11) bedeckt sind, hergestellt wird, indem durch plastische Verformung nur eine der benachbarten Hülsen (3, 5, 13) von jedem Zwischenkörper aus Elastomer (25a, 25b, 25d) zusammengezogen wird, oder indem diese Hülse derart erweitert wird, um ihren Querschnitt zu verringern oder um diesen Letzteren zu vergrößern.

7. Verfahren zur Herstellung eines elastischen Lagers (1), das insbesondere nach einem der vorhergehenden Ansprüche erstellt wird, wobei:
- eine erste Lagerunterbaugruppe (33), die aus einer äußeren Bewehrung oder einer inneren Bewehrung besteht, erstellt wird, die mindestens einen Zwischenkörper aus Elastomer (25c, 25d) aufweist,
- eine zweite Lagerunterbaugruppe (31), die aus einer äußeren Bewehrung oder einer inneren Bewehrung und/oder aus zwei Zwischenbewehrungen besteht, erstellt wird, indem zwei hülsenförmige Zwischenräume gebildet werden, in denen zwei Zwischenkörper aus Elastomer (25c, 25d) angeordnet werden,
- die zwei Zwischenkörper aus Elastomer der zweiten Lagerunterbaugruppe und gegebenenfalls ein Zwischenkörper aus Elastomer der ersten Lagerunterbaugruppe vor dem Zusammenbauen der Lagerunterbaugruppen (31, 33) in Kompression vorgespannt werden, insbesondere indem die benachbarten Bewehrungen plastisch verformt werden,
**dadurch gekennzeichnet, dass** ein Zwischenkörper aus Elastomer beim gegenseitigen Montieren der ersten und der zweiten Lagerunterbaugruppe in die radiale Richtung vorgespannt wird, wobei die Lagerunterbaugruppen (31, 33) in axialer Richtung aufgesteckt werden, ohne Klebstoff zu verwenden, um einen Flächenkontakt von einander zugewandten Grenzflächen der Lagerunterbaugruppen zu bilden.

## Claims

1. An elastic bearing (1) for an automotive vehicle, in particular for connecting elastically a part of the vehicle, such as an engine and/or a transmission, to the bodywork, said bearing comprising: a rigid and plastically deformable inner bushing (5), a rigid and plastically deformable outer bushing (3) which surrounds the inner bushing, and at least two rigid intermediate bushings (11, 13, 51), at least one of which is plastically deformable, the inner bushing, the outer bushing and at least the two intermediate bushings being arranged with respect to one another in such a way that at least three intermediate spaces are formed, in the form of bushings, in which at least three intermediate elastomer bodies are arranged, the at least three intermediate elastomer bodies (25a-25d) being prestressed in compression;
**characterised in that** the bearing comprises two or more separated bearing subassemblies (31, 33), a first bearing subassembly (33) being constituted in the first place by the outer bushing (3) or the inner bushing (5), and if need be by an intermediate bushing (51), and a second bearing subassembly (31) being constituted by the inner bushing (5) or the outer bushing (3), and precisely by two intermediate bushings (11, 13), the first bearing subassembly (33) comprising, before assembly on the second bearing subassembly (31), an intermediate elastomer body (25c) with a boundary surface (35) not covered by a bushing, and the second bearing subassembly (31) comprising an intermediate bushing (13) and an opposite boundary surface (37) free from elastomer, the boundary surfaces (35, 37) being suitably dimensioned the one to the other in such a way that, when an axial fitting of the two bearing subassemblies (31, 33) onto one another takes place, a pre-compression is established, generated in the radial direction of the intermediate elastomer body (25c); wherein the bearing subassemblies (31, 33) are suitable for being fitted together in the axial direction without using an adhesive agent to form a surface contact of boundary surfaces (35, 37) of the bearing subassemblies facing one another.

2. The bearing (1) according to claim 1, **characterised in that** at least one of the intermediate elastomer bodies (25c) has a boundary surface (35) facing towards the adjacent rigid bushing (13) which rests against a boundary surface (37) facing towards that of the adjacent bushing (13) free from chemical adhesive agent.

3. The bearing (1) according to any one of claims 1 and 2, **characterised in that** at least one of the intermediate elastomer bodies (25c) has a boundary surface (35) which rests against an opposite boundary surface (37) of the adjacent bushing (13) thereby creating a contact connection with force transmission which is formed exclusively by mechanical static frictional forces between the boundary surfaces (35, 37).

4. The bearing (1) according to any one of the preceding claims, **characterised in that** it comprises precisely three intermediate elastomer bodies (25a-25c) between the outer bushing (3), the inner bushing (5) and two intermediate bushings (11, 13), or precisely four intermediate elastomer bodies (25a-25d) between the outer bushing (3), the inner bushing (5) and three intermediate bushings (11, 13, 51).

5. The bearing (1) according to any one of the preceding claims, **characterised in that** each of the bushings (3, 5, 11, 13, 51) has a cylindrical inner side and an outer side and/or that the radial thickness of all the intermediate elastomer bodies (25a-d) is essentially equal to and/or greater than the radial thickness of all the intermediate bushings (11, 13, 51), in particular all the bushings (3, 5, 11, 13, 51).

6. The bearing (1) according to any one of the preceding claims, **characterised in that** a pre-compression of all the intermediate elastomer bodies (25, 25b, 25d) covered on both sides by bushings (3, 5, 11) is created by shrinking by plastic deformation one of the adjacent bushings (3, 5, 13) of each intermediate elastomer body (25a, 25b, 25d) or by enlarging this bushing, in such a way as to reduce its cross-section or to increase the latter.

7. A method for manufacturing an elastic bearing (1), in particular produced according to any one of the preceding claims, wherein:
- a first bearing subassembly (33) is produced, comprising an outer armature or an inner armature comprising at least one intermediate elastomer body (25c, 25d),
- a second bearing subassembly (31) is produced, comprising an outer armature or an inner armature and/or two intermediate armatures by creating two intermediate spaces in the form of bushings, in which two intermediate elastomer bodies (25c, 25d) are arranged;
- the two intermediate elastomer bodies of the second bearing subassembly are prestressed in compression, and if need be an intermediate elastomer body of the first bearing subassembly, before assembly of the bearing subassemblies (31, 33), in particular by deforming plastically the adjacent armatures,
**characterised in that** an intermediate elastomer body is prestressed in the radial direction when the mutual assembly of the first and the second bearing subassembly takes place, wherein the bearing subassemblies (31, 33) are fitted together in the axial direction without the use of an adhesive agent to form a surface contact of the boundary surfaces of the bearing subassemblies facing one another.
